# EUROPÄISCHE PATENTSCHRIFT

(11) **EP 4 288 361 B1**
(45) Veröffentlichungstag und Bekanntmachung des Hinweises auf die Patenterteilung: **16.10.2024**
(21) Anmeldenummer: 22700870.3
(22) Anmeldetag: 18.01.2022
(51) Int. Cl.: B65G 69/00, B65G 1/04

(54) **VERRIEGELUNGSVORRICHTUNG UND FAHRERLOSES TRANSPORTFAHRZEUG**
LOCKING APPARATUS AND DRIVERLESS TRANSPORT VEHICLE
APPAREIL DE VERROUILLAGE ET VÉHICULE DE TRANSPORT SANS CONDUCTEUR

(30) Priorität: 02.02.2021 DE 102021000494
(43) Veröffentlichungstag der Anmeldung: 13.12.2023
(73) Patentinhaber: SEW-EURODRIVE GmbH & Co. KG, 76646 Bruchsal (DE)
(72) Erfinder: HAMMER, Marc, 76297 Stutensee (DE); DEGEN, Dirk, 76646 Bruchsal (DE); JOCHEM, Sascha, 67360 Lingenfeld (DE)
(86) Internationale Anmeldenummer: PCT/EP2022/025016
(87) Internationale Veröffentlichungsnummer: WO 2022/167146

(56) Entgegenhaltungen:
- EP-A1- 0 473 910
- WO-A1-2016/195596
- US-A- 4 127 856
- US-A- 4 887 954
- US-A- 6 033 174
- US-A1- 2013 017 045
- US-A1- 2015 210 487
- US-A1- 2019 329 993
- US-A1- 2019 367 300

## Beschreibung

Die Erfindung betrifft eine Verriegelungsvorrichtung zur Verriegelung mit einem beweglichen Gestell, umfassend eine Basis einen Rasthaken, welcher relativ zu der Basis um eine in eine Querrichtung verlaufende Schwenkachse zwischen einer Verriegelungsstellung und einer Entriegelungsstellung schwenkbar ist, und eine Rastvorrichtung zur Blockierung des Rasthakens an der Basis in der Verriegelungsstellung. Die Erfindung betrifft auch ein fahrerloses Transportfahrzeug, welches mindestens eine erfindungsgemäße Verriegelungsvorrichtung umfasst.

In verschiedenen Anlagen, beispielsweise in Supermärkten, Industriehallen, Logistikzentren, Krankenhäusern und Produktionswerken, sind fahrerlose Transportfahrzeuge einsetzbar. Die fahrerlosen Transportfahrzeuge dienen beispielsweise zum Transport von Gegenständen, beispielsweise von beweglichen Gestellen, innerhalb der jeweiligen Anlage.

Ein solches Gestell weist eine oder mehrere übereinander angeordnete Tragflächen zur Aufnahme von Waren auf. Ein solches Gestell weist auch mehrere drehbare Rollen auf, welche unterhalb der Tragflächen angeordnet sind, und welche in Kontakt mit einem Boden sind, auf welchem das Gestell steht. Mittels der Rollen ist das Gestell beweglich.

Zum Transport des Gestells mittels eines fahrerlosen Transportfahrzeugs kann das Gestell mittels einer Verriegelungsvorrichtung mit dem fahrerlosen Transportfahrzeug verriegelt werden. Wenn das Gestell sich an einem stationären Arbeitsplatz befindet, wo beispielsweise darauf befindliche Waren entnommen werden, kann das Gestell mittels einer Verriegelungsvorrichtung an dem besagten Arbeitsplatz verriegelt werden um ein ungewolltes Wegrollen des Gestells zu verhindern.

Aus der DE 203 02 929 U1 ist eine Vorrichtung zur Sicherung von Ladegütern bekannt. Die Vorrichtung umfasst einen Schlitten, der an einer Schiene verschiebbar angeordnet ist. Die Schiene weist Rastausnehmungen zur Aufnahme eines Rastelements auf.

Aus der DE 10 2012 021 450 A1 ist eine Vorrichtung zur Sicherung von Behältern und Paletten auf Transportflächen bekannt. Dabei sind in der Transportfläche Rinnen eingelassen, und darüber ist ein schmales Gestell befestigt. Grundrahmen der Behälter sind an dem Gestell befestigbar.

Aus der US 4,127,856 A ist eine Rastvorrichtung für ein Fahrzeug bekannt. Die Rastvorrichtung umfasst einen schwenkbaren Rasthaken, welcher in einer Verriegelungsstellung einen Bolzen des Fahrzeugs fixiert.

Aus der US 6,033,174 A ist eine Halteeinrichtung für ein Fahrzeug bekannt. Die Rastvorrichtung umfasst einen Rasthaken und einen berührungslosen Sensor zur Erfassung eines Elements des Fahrzeugs.

Aus der WO 2016/195596 A1 sind ein Verfahren und eine Vorrichtung zur Kopplung eines Transportfahrzeugs mit einer beweglichen Last bekannt. Dabei greift ein Verriegelungselement des Transportfahrzeugs in eine Verriegelungsöffnung der Last ein.

Aus der US 2015/0210487 A1 ist eine Rastvorrichtung für ein Fahrzeug bekannt. Die Rastvorrichtung umfasst einen schwenkbaren Rasthaken, welcher in einer Verriegelungsstellung ein Element des Fahrzeugs fixiert.

Der Erfindung liegt die Aufgabe zugrunde, eine Verriegelungsvorrichtung zur Verriegelung mit einem beweglichen Gestell zu schaffen, welche an einem stationären Arbeitsplatz ebenso wie an einem fahrerlosen Transportfahrzeug einsetzbar ist. Der Erfindung liegt auch die Aufgabe zugrunde, ein entsprechendes fahrerloses Transportfahrzeug zu schaffen.

Die Aufgabe wird durch eine Verriegelungsvorrichtung mit den in Anspruch 1 angegebenen Merkmalen gelöst. Vorteilhafte Ausgestaltungen und Weiterbildungen sind Gegenstand der Unteransprüche. Die Aufgabe wird auch durch ein fahrerloses Transportfahrzeug mit den in Anspruch 12 angegebenen Merkmalen gelöst.

Eine erfindungsgemäße Verriegelungsvorrichtung zur Verriegelung mit einem beweglichen Gestell umfasst eine Basis, einen Rasthaken, welcher relativ zu der Basis um eine in eine Querrichtung verlaufende Schwenkachse zwischen einer Verriegelungsstellung und einer Entriegelungsstellung schwenkbar ist, und eine Rastvorrichtung zur Blockierung des Rasthakens an der Basis in der Verriegelungsstellung. Der Rasthaken weist einen Rastabschnitt und einen Steuerabschnitt auf, und der Rastabschnitt weist eine Fangkontur zur Aufnahme eines Profils eines Gestells in der Verriegelungsstellung auf. Der Rasthaken ist derart angeordnet, dass bei Aufbringen einer Verriegelungskraft auf den Steuerabschnitt der Rasthaken von der Entriegelungsstellung in die Verriegelungsstellung geschwenkt wird, und die Rastvorrichtung ist derart ausgestaltet und angeordnet, dass der Rasthaken bei Erreichen der Verriegelungsstellung automatisch durch die Rastvorrichtung blockiert wird, wobei die Rastvorrichtung in eine Blockierposition gelangt.

Das Gestell ist mittels der Verriegelungsvorrichtung an einem stationären Arbeitsplatz, wo beispielsweise darauf befindliche Waren entnommen werden, verriegelbar um ein ungewolltes Wegrollen des Gestells zu verhindern. Dabei wird das Gestell durch Schieben auf die Verriegelungsvorrichtung automatisch verriegelt, eine zusätzliche manuelle Betätigung der Verriegelungsvorrichtung ist zum Verriegeln nicht erforderlich, wodurch Prozesszeit eingespart wird.

Erfindungsgemäß weist der Rastabschnitt eine Auflauffläche auf, welche auf einer dem Steuerabschnitt abgewandten Seite der Fangkontur angeordnet ist, und die geneigt zu einer Längsrichtung und geneigt zu einer Vertikalrichtung verläuft. Die Auflauffläche gestattet ein Einschieben eines Gestells auch, wenn der Rasthaken sich in der Verriegelungsstellung befindet. Das Profil des Gestells gleitet dabei entlang der Auflauffläche über die Fangkontur, fällt hinter der Fangkontur ein und wird somit von der Fangkontur aufgenommen.

Gemäß einer vorteilhaften Ausgestaltung der Erfindung sind der Rasthaken und die Rastvorrichtung derart angeordnet, dass bei einer Bewegung der Rastvorrichtung aus der Blockierposition heraus, wenn die Rastvorrichtung den Rasthaken in der Verriegelungsstellung blockiert, und bei Abwesenheit einer Verriegelungskraft auf den Steuerabschnitt der Rasthaken von der Verriegelungsstellung in die Entriegelungsstellung geschwenkt wird. Das Gestell ist somit durch einfaches Bewegen der Rastvorrichtung aus der Blockierposition heraus entriegelbar.

Gemäß einer bevorzugten Ausgestaltung der Erfindung erstreckt der Rastabschnitt sich zumindest annähernd rechtwinklig zu dem Steuerabschnitt. Dies ermöglicht eine kompakte Bauweise der Verriegelungsvorrichtung.

Gemäß einer vorteilhaften Ausgestaltung der Erfindung erfolgt eine Schwenkbewegung des Rasthakens von der Verriegelungsstellung in die Entriegelungsstellung durch eine auf den Rasthaken, insbesondere auf den Rastabschnitt, wirkende Schwerkraft. Zusätzliche Komponente, wie beispielsweise Federn oder Antriebe, sind somit nicht erforderlich, und der Aufbau der Verriegelungsvorrichtung ist vereinfacht.

Gemäß einer weiteren vorteilhaften Ausgestaltung der Erfindung erfolgt eine Schwenkbewegung des Rasthakens von der Verriegelungsstellung in die Entriegelungsstellung durch eine auf den Rasthaken wirkende Federkraft. Die Verriegelungsstellung ist somit flexibel in verschiedenen Ausrichtungen einsetzbar. Die Ausrichtung ist nicht von der Richtung der Schwerkraft abhängig.

Gemäß einer vorteilhaften Weiterbildung der Erfindung weist der Steuerabschnitt eine Steuerkontur auf, welche derart mit der Rastvorrichtung zusammenwirkt, dass während einer Schwenkbewegung des Rasthakens von der Entriegelungsstellung in die Verriegelungsstellung die Rastvorrichtung aus der Blockierposition heraus bewegt wird.

Vorzugsweise wirkt die Steuerkontur dabei derart mit der Rastvorrichtung zusammen, dass bei Erreichen der Verriegelungsstellung die Rastvorrichtung in die Blockierposition hinein bewegt wird. Dadurch wird das Gestell von der Verriegelungsvorrichtung automatisch verriegelt.

Gemäß einer bevorzugten Ausgestaltung der Erfindung weist der Steuerabschnitt eine Bohrung auf, welche derart mit der Rastvorrichtung zusammenwirkt, dass bei in der Verriegelungsstellung befindlichem Rasthaken und in der Blockierposition befindlicher Rastvorrichtung ein Rastbolzen der Rastvorrichtung in die Bohrung eingreift. Der in die Bohrung eingreifende Rastbolzen stellt die Blockierung des Rasthakens in der Verriegelungsstellung sicher.

Gemäß einer vorteilhaften Ausgestaltung der Erfindung ist die Rastvorrichtung aus der Blockierposition heraus und in die Blockierposition hinein in die Querrichtung bewegbar, und die Bohrung verläuft in die Querrichtung. Das Gestell ist somit durch eine einfache translatorische Bewegung der Rastvorrichtung entriegelbar.

Gemäß einer bevorzugten Ausgestaltung der Erfindung ist die Rastvorrichtung aus der Blockierposition heraus entgegen einer Federkraft bewegbar. Die Rastvorrichtung wird somit von der Federkraft automatisch in die Blockierposition bewegt.

Gemäß einer vorteilhaften Weiterbildung der Erfindung weist der Rasthaken einen Sensor zur Detektion eines Profils eines Gestells auf. Der Sensor gestattet eine Erkennung, ob ein Gestell mit der Verriegelungsvorrichtung verriegelt ist, und eine entsprechende Meldung an ein Steuergerät.

Ein erfindungsgemäßes fahrerloses Transportfahrzeug umfasst eine Antriebseinrichtung, einen elektrischen Energiespeicher zur Versorgung der Antriebseinrichtung sowie eine Steuereinheit zur Steuerung der Antriebseinrichtung und mindestens eine erfindungsgemäße Verriegelungsvorrichtung. Die Antriebseinrichtung umfasst beispielsweise einen Elektromotor, ein Getriebe und Antriebsräder. Zum Transport eines Gestells ist das Gestell mittels der Verriegelungsvorrichtung mit dem fahrerlosen Transportfahrzeug verriegelbar.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine perspektivische Darstellung eines mit einer Verriegelungsvorrichtung verriegelten beweglichen Gestells,
- Figur 2:: eine Seitenansicht der Verriegelungsvorrichtung in Verriegelungsstellung,
- Figur 3:: eine Seitenansicht der Verriegelungsvorrichtung in Entriegelungsstellung und
- Figur 4:: eine Draufsicht auf die Verriegelungsvorrichtung in Entriegelungsstellung.

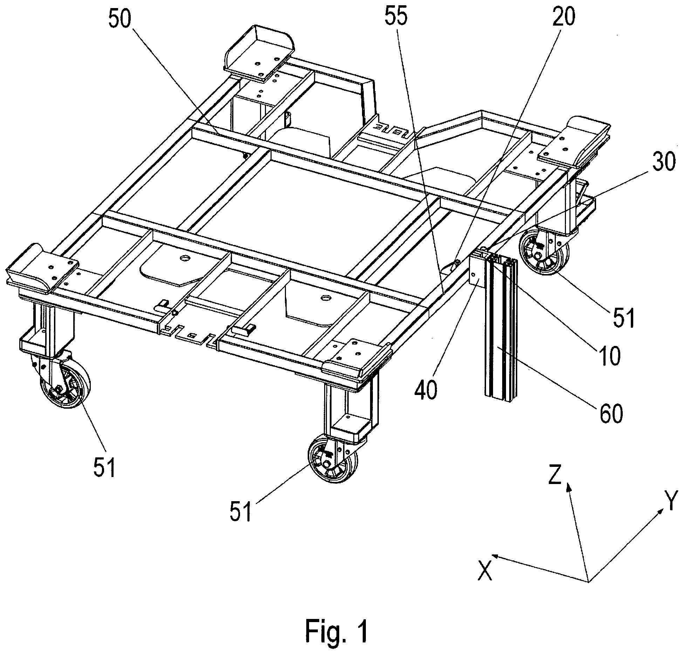

Figur 1 zeigt eine perspektivische Darstellung eines mit einer Verriegelungsvorrichtung 10 verriegelten beweglichen Gestells 50. Das Gestell 50 befindet sich auf einem ebenen Boden, welcher sich rechtwinklig zu einer Vertikalrichtung Z erstreckt. Eine Querrichtung Y erstreckt sich rechtwinklig zu der Vertikalrichtung Z. Eine Längsrichtung X erstreckt sich rechtwinklig zu der Vertikalrichtung Z und rechtwinklig zu der Querrichtung Y.

Das Gestell 50 und umfasst eine Tragfläche, welche sich rechtwinklig zu der Vertikalrichtung Z erstreckt. Die Tragfläche dient zur Aufnahme von zu transportierenden Waren, beispielsweise Kisten oder Kartons. Die Tragfläche ist aus mehreren Profilen 55 gebildet, die miteinander verbunden, beispielsweise verschweißt, sind. Die Profile 55, insbesondere Profile 55, die am Rand der Tragfläche angeordnet sind, weisen einen rechteckigen oder quadratischen Querschnitt auf.

Das Gestell 50 umfasst ferner vier drehbare Rollen 51. Die Rollen 51 sind unterhalb der Tragflächen angeordnet und stehen in Kontakt mit dem Boden. Die Rollen 51 sind jeweils um eine Drehachse drehbar, welche rechtwinklig zu der Vertikalrichtung Z verläuft. Die Rollen 51 sind zusätzlich jeweils um eine Schwenkachse schwenkbar, welche in Vertikalrichtung Z verläuft. Die Drehachse und die Schwenkachse einer solche Rolle 51 schneiden sich vorliegend nicht, sondern sind voneinander beabstandet. Mittels der Rollen 51 ist das Gestell 50 auf dem Boden beweglich.

An einer Säule 60, die sich von dem Boden in Vertikalrichtung Z erstreckt, ist eine Verriegelungsvorrichtung 10 angebracht. Die Verriegelungsvorrichtung 10 umfasst eine Basis 40, einen Rasthaken 20 und eine Rastvorrichtung 30. Die Basis 40 der Verriegelungsvorrichtung 10 ist an der Säule 60 befestigt. Zur Verriegelung des Gestells 50 wirkt der Rasthaken 20 der Verriegelungsvorrichtung 10 mit einem Profil 55 des Gestells 50 zusammen.

Es ist auch denkbar, eine Verriegelungsvorrichtung 10 an einer Wand oder einem Fahrzeug anzubringen. Auch ist es denkbar, eine Verriegelungsvorrichtung 10 an einem Gestell 50 anzubringen, so dass mehrere Gestelle 50 miteinander verriegelbar sind. Insbesondere ist es denkbar, eine Verriegelungsvorrichtung 10 an einem fahrerlosen Transportfahrzeug anzubringen. Somit sind Gestelle von dem fahrerlosen Transportfahrzeug innerhalb einer Anlage transportierbar.

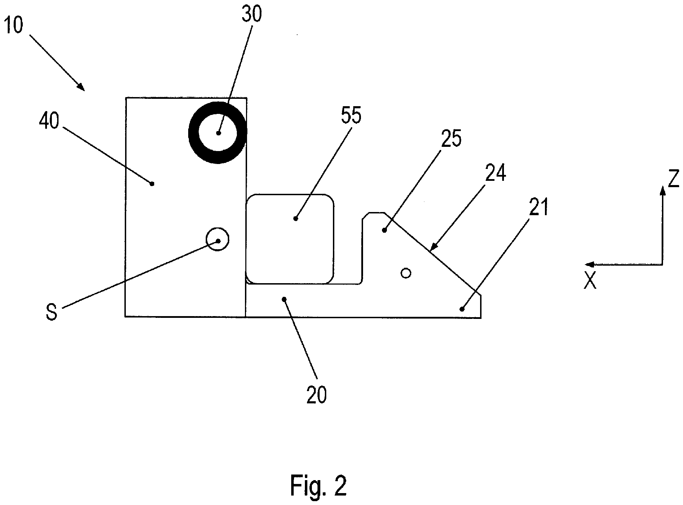

Figur 2 zeigt eine Seitenansicht der Verriegelungsvorrichtung 10 in Verriegelungsstellung. Der Rasthaken 20 ist relativ zu der Basis 40 um eine in eine Querrichtung Y verlaufende Schwenkachse S zwischen der hier gezeigten Verriegelungsstellung und einer Entriegelungsstellung schwenkbar. Die Rastvorrichtung 30 befindet sich in der Blockierposition und blockiert den Rasthaken 20 an der Basis 40 in der Verriegelungsstellung.

Der Rasthaken 20 weist einen Rastabschnitt 21 und einen hier verdeckten Steuerabschnitt 22 auf. Der Rastabschnitt 21 weist eine Fangkontur 25 auf, in welcher das Profil 55 des Gestells 50 in der Verriegelungsstellung aufgenommen ist. Der Rastabschnitt 21 erstreckt sich zumindest annähernd rechtwinklig zu dem Steuerabschnitt 22. In der Verriegelungsstellung erstreckt sich der Rastabschnitt 21 in Längsrichtung X, und der Steuerabschnitt 22 erstreckt sich in Vertikalrichtung Z.

Die Schwenkbewegung des Rasthakens 20 von der Verriegelungsstellung in die Entriegelungsstellung erfolgt vorliegend durch eine auf den Rasthaken 20, insbesondere auf den Rastabschnitt 21, wirkende Schwerkraft. Alternativ oder zusätzlich ist es denkbar, eine Feder vorzusehen, so dass die Schwenkbewegung des Rasthakens 20 von der Verriegelungsstellung in die Entriegelungsstellung durch eine auf den Rasthaken 20 wirkende Federkraft erfolgt.

Der Rastabschnitt 21 weist eine Auflauffläche 24 auf, die geneigt zu einer Längsrichtung X und geneigt zu einer Vertikalrichtung Z verläuft. Die Auflauffläche 24 ist auf einer dem Steuerabschnitt 22 abgewandten Seite der Fangkontur 25 angeordnet.

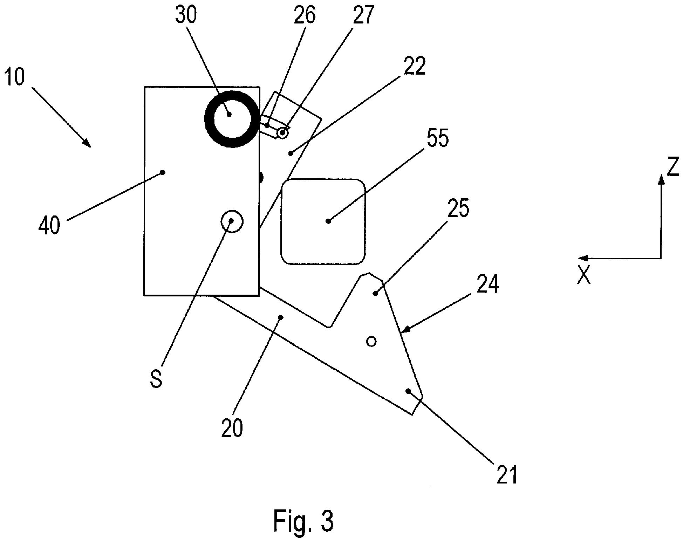

Figur 3 zeigt eine Seitenansicht der Verriegelungsvorrichtung 10 in Entriegelungsstellung. Der Rasthaken 20 ist dabei im Vergleich zu der in Figur 1 dargestellten Stellung relativ zu der Basis 40 um die Schwenkachse S geschwenkt. Das Profil 55 des Gestells 50 ist in der Entriegelungsstellung freigegeben. Die Rastvorrichtung 30 befindet sich in der Blockierposition. Die Rastvorrichtung 30 blockiert den Rasthaken 20 jedoch nicht in der Entriegelungsstellung.

Wenn das Profil 55 des Gestells 50 gegen den Steuerabschnitt 22 des Rasthaken 20 gedrückt wird, so wird dadurch eine Verriegelungskraft auf den Steuerabschnitt 22 aufgebracht. Die Verriegelungskraft wirkt in Längsrichtung X in Richtung auf die Basis zu. Bei Aufbringen der Verriegelungskraft wird der Rasthaken 20 von der Entriegelungsstellung in die Verriegelungsstellung geschwenkt.

Der Steuerabschnitt 22 weist eine Bohrung 27 auf, welche mit einem hier verdeckten Rastbolzen 32 der Rastvorrichtung 30 zusammenwirkt. Die Bohrung 27 verläuft in die Querrichtung Y. Die Rastvorrichtung 30 mit dem Rastbolzen 32 ist in die Querrichtung Y bewegbar. Die Rastvorrichtung 30 ist aus der Blockierposition heraus entgegen einer Federkraft bewegbar. Bei Abwesenheit einer Gegenkraft wird die Rastvorrichtung 30 von der besagten Federkraft in die Blockierposition hinein bewegt. Bei in der Verriegelungsstellung befindlichem Rasthaken 20 und in der Blockierposition befindlicher Rastvorrichtung 30 greift der Rastbolzen 32 in die Bohrung 27 ein.

Der Steuerabschnitt 22 weist eine Steuerkontur 26 auf. Die Steuerkontur 26 ist eine Fläche, die sich von der Bohrung 27 bis zu einem Rand des Steuerabschnitts 22 erstreckt, und die geneigt zu der Querrichtung Y verläuft. Während einer Schwenkbewegung des Rasthakens 20 von der Entriegelungsstellung in die Verriegelungsstellung gleitet der Rastbolzen 32 entlang der Steuerkontur 26. Dadurch wird die Rastvorrichtung 30 aus der Blockierposition heraus bewegt. Bei Erreichen der Verriegelungsstellung fällt der Rastbolzen 32 in die Bohrung 27 ein. Dadurch gelangt die Rastvorrichtung 30 in die Blockierposition, und der Rasthaken 20 wird in der Verriegelungsstellung automatisch durch die Rastvorrichtung 30 blockiert.

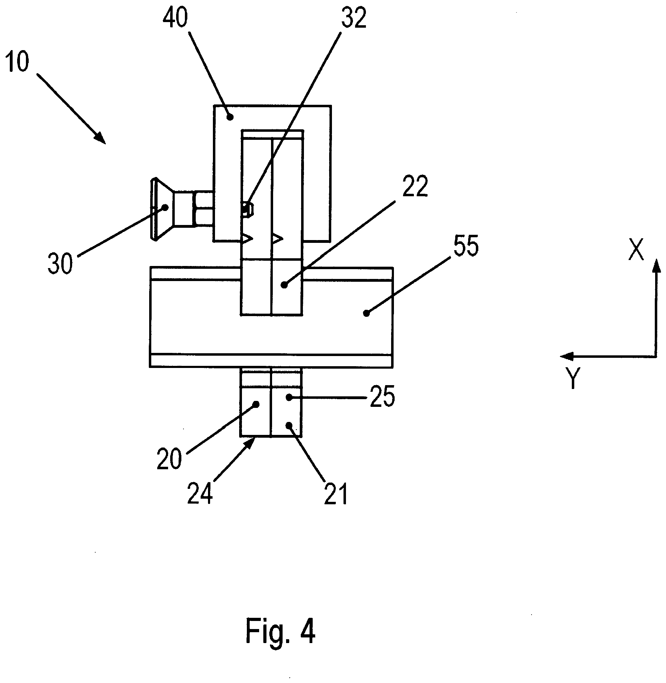

Figur 4 zeigt eine Draufsicht auf die Verriegelungsvorrichtung 10 in Entriegelungsstellung. Die Rastvorrichtung 30 befindet sich in der Blockierposition, und der Rastbolzen 32 ragt in einen Hohlraum der Basis 40 hinter dem Steuerabschnitt 22 des Rasthakens 20 hinein. Wie bereits erwähnt, ist die Rastvorrichtung 30 durch Ziehen in Querrichtung Y aus der Blockierposition heraus entgegen einer Federkraft bewegbar.

Bei einer solchen Bewegung der Rastvorrichtung 30 aus der Blockierposition heraus wird der Rastbolzen 32 aus der Bohrung 27 heraus gezogen. Bei Abwesenheit einer Verriegelungskraft auf den Steuerabschnitt 22 wird der Rasthaken 20 dabei von der Verriegelungsstellung in die Entriegelungsstellung geschwenkt.

### Bezugszeichenliste

- 10: Verriegelungsvorrichtung
- 20: Rasthaken
- 21: Rastabschnitt
- 22: Steuerabschnitt
- 24: Auflauffläche
- 25: Fangkontur
- 26: Steuerkontur
- 27: Bohrung
- 30: Rastvorrichtung
- 32: Rastbolzen
- 40: Basis
- 50: Gestell
- 51: Rolle
- 55: Profil
- 60: Säule
- S: Schwenkachse
- X: Längsrichtung
- Y: Querrichtung
- Z: Vertikalrichtung

## Patentansprüche

1. Verriegelungsvorrichtung (10) zur Verriegelung mit einem beweglichen Gestell (50), umfassend
eine Basis (40),
einen Rasthaken (20), welcher relativ zu der Basis (40) um eine in eine Querrichtung (Y) verlaufende Schwenkachse (S)
zwischen einer Verriegelungsstellung und einer Entriegelungsstellung schwenkbar ist, und
eine Rastvorrichtung (30) zur Blockierung des Rasthakens (20) an der Basis (40) in der Verriegelungsstellung,
wobei
der Rasthaken (20) einen Rastabschnitt (21) und einen Steuerabschnitt (22) aufweist,
der Rastabschnitt (21) eine Fangkontur (25) zur Aufnahme eines Profils (55) eines Gestells (50) in der Verriegelungsstellung aufweist,
der Rasthaken (20) derart angeordnet ist, dass bei Aufbringen einer Verriegelungskraft auf den Steuerabschnitt (22) der Rasthaken (20) von der Entriegelungsstellung in die Verriegelungsstellung geschwenkt wird, und
die Rastvorrichtung (30) derart ausgestaltet und angeordnet ist, dass der Rasthaken (20) bei Erreichen der Verriegelungsstellung automatisch durch die Rastvorrichtung (30) blockiert wird, wobei die Rastvorrichtung (30) in eine Blockierposition gelangt, **dadurch gekennzeichnet, dass**
der Rastabschnitt (21) eine Auflauffläche (24) aufweist, welche auf einer dem Steuerabschnitt (22) abgewandten Seite der Fangkontur (25) angeordnet ist, und die geneigt zu einer Längsrichtung (X) und geneigt zu einer Vertikalrichtung (Z) verläuft.

2. Verriegelungsvorrichtung (10) nach Anspruch 1,
**dadurch gekennzeichnet, dass**
der Rasthaken (20) und die Rastvorrichtung (30) derart angeordnet sind, dass bei einer Bewegung der Rastvorrichtung (30) aus der Blockierposition heraus, und
bei Abwesenheit einer Verriegelungskraft auf den Steuerabschnitt (22),
der Rasthaken (20) von der Verriegelungsstellung in die Entriegelungsstellung geschwenkt wird.

3. Verriegelungsvorrichtung (10) nach einem der vorangegangenen Ansprüche,
**dadurch gekennzeichnet, dass**
der Rastabschnitt (21) sich zumindest annähernd rechtwinklig zu dem Steuerabschnitt (22) erstreckt.

4. Verriegelungsvorrichtung (10) nach einem der vorangegangenen Ansprüche,
**dadurch gekennzeichnet, dass**
eine Schwenkbewegung des Rasthakens (20) von der Verriegelungsstellung in die Entriegelungsstellung durch eine auf den Rasthaken (20), insbesondere auf den Rastabschnitt (21), wirkende Schwerkraft erfolgt.

5. Verriegelungsvorrichtung (10) nach einem der vorangegangenen Ansprüche,
**dadurch gekennzeichnet, dass**
eine Schwenkbewegung des Rasthakens (20) von der Verriegelungsstellung in die Entriegelungsstellung durch eine auf den Rasthaken (20) wirkende Federkraft erfolgt.

6. Verriegelungsvorrichtung (10) nach einem der vorangegangenen Ansprüche,
**dadurch gekennzeichnet, dass**
der Steuerabschnitt (22) eine Steuerkontur (26) aufweist, welche derart mit der Rastvorrichtung (30) zusammenwirkt, dass während einer Schwenkbewegung des Rasthakens (20) von der Entriegelungsstellung in die Verriegelungsstellung die Rastvorrichtung (30) aus der Blockierposition heraus bewegt wird.

7. Verriegelungsvorrichtung (10) Anspruch 6,
**dadurch gekennzeichnet, dass**
die Steuerkontur (26) derart mit der Rastvorrichtung (30) zusammenwirkt, dass bei Erreichen der Verriegelungsstellung die Rastvorrichtung (30) in die Blockierposition hinein bewegt wird.

8. Verriegelungsvorrichtung (10) nach einem der vorangegangenen Ansprüche,
**dadurch gekennzeichnet, dass**
der Steuerabschnitt (22) eine Bohrung (27) aufweist, welche derart mit der Rastvorrichtung (30) zusammenwirkt, dass bei in der Verriegelungsstellung befindlichem Rasthaken (20) und in der Blockierposition befindlicher Rastvorrichtung (30) ein Rastbolzen (32) der Rastvorrichtung (30) in die Bohrung (27) eingreift.

9. Verriegelungsvorrichtung (10) nach Anspruch 8,
**dadurch gekennzeichnet, dass**
die Rastvorrichtung (30) in die Querrichtung (Y) bewegbar ist, und dass die Bohrung (27) in die Querrichtung (Y) verläuft.

10. Verriegelungsvorrichtung (10) nach einem der vorangegangenen Ansprüche,
**dadurch gekennzeichnet, dass**
die Rastvorrichtung (30) aus der Blockierposition heraus entgegen einer Federkraft bewegbar ist.

11. Verriegelungsvorrichtung (10) nach einem der vorangegangenen Ansprüche,
**dadurch gekennzeichnet, dass**
der Rasthaken (20) einen Sensor zur Detektion eines Profils (55) eines Gestells (50) aufweist.

12. Fahrerloses Transportfahrzeug, umfassend
eine Antriebseinrichtung, einen elektrischen Energiespeicher zur Versorgung der Antriebseinrichtung sowie eine Steuereinheit zur Steuerung der Antriebseinrichtung und mindestens eine Verriegelungsvorrichtung (10) nach einem der vorangegangenen Ansprüche.

## Claims

1. Locking device (10) for locking to a mobile stand (50), comprising a base (40), a snap-in hook (20) that is pivotable relative to the base (40) between a locking position and an unlocking position about a pivot axis (S) running in a transverse direction (Y), and a snap-in device (30) for blocking the snap-in hook (20) in the locking position on the base (40),
the snap-in hook (20) having a snap-in portion (21) and a control portion (22),
the snap-in portion (21) having a detent contour (25) for receiving a profile (55) of a stand (50) in the locking position,
the snap-in hook (20) being arranged such that when a locking force is exerted on the control portion (22), the snap-in hook (20) is pivoted from the unlocking position into the locking position, and
the snap-in device (30) being configured and arranged such that when the locking position is reached, the snap-in hook (20) is automatically blocked by the snap-in device (30), the snap-in device (30) reaching a blocking position in the process,
**characterised in that**
the snap-in portion (21) has a ramp surface (24), which is arranged on a side of the detent contour (25) facing away from the control portion (22) and which runs in a sloped manner with respect to a longitudinal direction (X) and in a sloped manner with respect to a vertical direction (Z).

2. Locking device (10) according to claim 1,
**characterised in that**
the snap-in hook (20) and the snap-in device (30) are arranged such that when the snap-in device (30) moves out of the blocking position and there is no locking force exerted on the control portion (22), the snap-in hook (20) is pivoted from the locking position into the unlocking position.

3. Locking device (10) according to any of the preceding claims,
**characterised in that**
the snap-in portion (21) extends at least approximately at right angles to the control portion (22).

4. Locking device (10) according to any of the preceding claims,
**characterised in that**
a pivoting movement of the snap-in hook (20) from the locking position into the unlocking position takes place as a result of a gravitational force acting on the snap-in hook (20), in particular on the snap-in portion (21).

5. Locking device (10) according to any of the preceding claims,
**characterised in that**
a pivoting movement of the snap-in hook (20) from the locking position into the unlocking position takes place as a result of a spring force acting on the snap-in hook (20).

6. Locking device (10) according to any of the preceding claims,
**characterised in that**
the control portion (22) has a control contour (26) which interacts with the snap-in device (30) such that during a pivoting movement of the snap-in hook (20) from the unlocking position into the locking position, the snap-in device (30) is moved out of the blocking position.

7. Locking device (10) according to claim 6,
**characterised in that**
the control contour (26) interacts with the snap-in device (30) such that when the locking position is reached, the snap-in device (30) is moved into the blocking position.

8. Locking device (10) according to any of the preceding claims,
**characterised in that**
the control portion (22) has a hole (27) which interacts with the snap-in device (30) such that when the snap-in hook (20) is in the locking position and the snap-in device (30) is in the blocking position, a snap-in pin (32) of the snap-in device (30) engages in the hole (27).

9. Locking device (10) according to claim 8,
**characterised in that**
the snap-in device (30) is movable in the transverse direction (Y), and **in that** the hole (27) runs in the transverse direction (Y).

10. Locking device (10) according to any of the preceding claims,
**characterised in that**
the snap-in device (30) is movable out of the blocking position counter to a spring force.

11. Locking device (10) according to any of the preceding claims,
**characterised in that**
the snap-in hook (20) has a sensor for detecting a profile (55) of a stand (50).

12. Driverless transportation vehicle comprising a drive apparatus, an electrical energy store for powering the drive apparatus, a control unit for controlling the drive apparatus, and at least one locking device (10) according to any of the preceding claims.

## Revendications

1. Dispositif de verrouillage (10) conçu pour être verrouillé avec un châssis mobile (50), comprenant
une embase (40),
un crochet encliquetable (20) apte à pivoter par rapport à ladite embase (40), autour d'un axe de pivotement (S) s'étendant dans une direction transversale (Y),
entre une position de verrouillage et une position de déverrouillage, et un dispositif d'encliquetage (30) dévolu au blocage dudit crochet encliquetable (20) sur l'embase (40), dans la position de verrouillage,
sachant que
le crochet encliquetable (20) comporte une zone d'encliquetage (21) et une zone de commande (22),
ladite zone d'encliquetage (21) étant munie d'un profil d'interception (25) destiné à recevoir un profilé (55) d'un châssis (50) dans ladite position de verrouillage,
le crochet encliquetable (20) étant disposé de façon telle que ledit crochet encliquetable (20) soit animé d'un pivotement, de la position de déverrouillage à la position de verrouillage, lorsqu'une force de verrouillage est appliquée à ladite zone de commande (22), et
le dispositif d'encliquetage (30) étant conçu et placé de telle sorte que le crochet encliquetable (20) soit bloqué automatiquement, par ledit dispositif d'encliquetage (30), lorsque ladite position de verrouillage est atteinte,
lequel dispositif d'encliquetage (30) parvient alors à un emplacement de blocage, **caractérisé par le fait que**
la zone d'encliquetage (21) est dotée d'une rampe de contact (24) qui, disposée sur une face du profil d'interception (25) tournée à l'opposé de la zone de commande (22), s'étend à l'oblique par rapport à une direction longitudinale (X) et à l'oblique par rapport à une direction verticale (Z).

2. Dispositif de verrouillage (10) selon la revendication 1,
**caractérisé par le fait que**
le crochet encliquetable (20) et le dispositif d'encliquetage (30) sont placés de façon telle que ledit crochet encliquetable (20) soit animé d'un pivotement, de la position de verrouillage à la position de déverrouillage, lors d'un mouvement dudit dispositif d'encliquetage (30) lui faisant quitter l'emplacement de blocage, et en l'absence d'une force de verrouillage agissant sur la zone de commande (22).

3. Dispositif de verrouillage (10) selon l'une des revendications précédentes, **caractérisé par le fait que**
la zone d'encliquetage (21) s'étend, au moins approximativement, à angle droit par rapport à la zone de commande (22).

4. Dispositif de verrouillage (10) selon l'une des revendications précédentes, **caractérisé par le fait**
**qu'**un mouvement pivotant du crochet encliquetable (20), de la position de verrouillage à la position de déverrouillage, a lieu sous l'effet d'une force gravitationnelle agissant sur ledit crochet encliquetable (20), en particulier sur la zone d'encliquetage (21).

5. Dispositif de verrouillage (10) selon l'une des revendications précédentes, **caractérisé par le fait**
**qu'**un mouvement pivotant du crochet encliquetable (20), de la position de verrouillage à la position de déverrouillage, a lieu sous l'effet d'une force élastique agissant sur ledit crochet encliquetable (20).

6. Dispositif de verrouillage (10) selon l'une des revendications précédentes, **caractérisé par le fait que**
la zone de commande (22) est pourvue d'un profil de commande (26) qui coopère, avec le dispositif d'encliquetage (30), de façon telle que ledit dispositif d'encliquetage (30) soit animé d'un mouvement lui faisant quitter l'emplacement de blocage au cours d'un mouvement pivotant du crochet encliquetable (20) de la position de déverrouillage à la position de verrouillage.

7. Dispositif de verrouillage (10) selon la revendication 6,
**caractérisé par le fait que**
le profil de commande (26) coopère, avec le dispositif d'encliquetage (30), de façon telle que ledit dispositif d'encliquetage (30) soit animé d'un mouvement l'introduisant à l'emplacement de blocage lorsque la position de verrouillage est atteinte.

8. Dispositif de verrouillage (10) selon l'une des revendications précédentes, **caractérisé par le fait que**
la zone de commande (22) présente un alésage (27) qui coopère, avec le dispositif d'encliquetage (30), de façon telle qu'un tenon encliquetable (32) dudit dispositif d'encliquetage (30) pénètre dans ledit alésage (27) lorsque le crochet encliquetable (20) se trouve dans la position de verrouillage et lorsque ledit dispositif d'encliquetage (30) occupe l'emplacement de blocage.

9. Dispositif de verrouillage (10) selon la revendication 8,
**caractérisé par le fait que**
le dispositif d'encliquetage (30) peut être mû dans la direction transversale (Y) ; et **par le fait que** l'alésage (27) s'étend dans ladite direction transversale (Y).

10. Dispositif de verrouillage (10) selon l'une des revendications précédentes, **caractérisé par le fait que**
le dispositif d'encliquetage (30) peut être mû hors de l'emplacement de blocage en opposition à une force élastique.

11. Dispositif de verrouillage (10) selon l'une des revendications précédentes, **caractérisé par le fait que**
le crochet encliquetable (20) est muni d'un capteur affecté à la détection d'un profilé (55) d'un châssis (50).

12. Véhicule de transport sans conducteur, comprenant un dispositif d'entraînement, un accumulateur d'énergie électrique affecté à l'alimentation dudit dispositif d'entraînement, ainsi qu'une unité de commande dévolue au pilotage dudit dispositif d'entraînement, et au moins un dispositif de verrouillage (10) conforme à l'une des revendications précédentes.
